# EUROPÄISCHE PATENTSCHRIFT

(11) **EP 3 625 650 B1**
(45) Veröffentlichungstag und Bekanntmachung des Hinweises auf die Patenterteilung: **19.01.2022**
(21) Anmeldenummer: 18729586.0
(22) Anmeldetag: 18.05.2018
(51) Int. Cl.: F16D 37/00

(54) **HAPTISCHE BEDIENEINRICHTUNG**
HAPTIC OPERATING DEVICE
DISPOSITIF DE COMMANDE HAPTIQUE

(30) Priorität: 20.05.2017 DE 102017111031
(43) Veröffentlichungstag der Anmeldung: 25.03.2020
(73) Patentinhaber: Inventus Engineering GmbH, 6771 St. Anton i. M. (AT)
(72) Erfinder: BATTLOGG, Stefan, 6771 St. Anton i.M. (AT)
(74) Vertreter: BSB Patentanwälte Schütte & Engelen Partnerschaft mbB
(86) Internationale Anmeldenummer: PCT/EP2018/063145
(87) Internationale Veröffentlichungsnummer: WO 2018/215350

(56) Entgegenhaltungen:
- WO-A1-2017/001697
- DE-A1-102011 003 277
- DE-A1-102012 017 423
- DE-A1-102013 019 045

## Beschreibung

Die vorliegende Erfindung betrifft eine haptische Bedieneinrichtung mit einer magnetorheologischen Übertragungsvorrichtung und ein Verfahren. Die erfindungsgemäße haptische Bedieneinrichtung kann auf vielfältigen technischen Gebieten eingesetzt werden, so z. B. zur Bedienung von technischen Einrichtungen wie Fahrzeugen, Flugzeugen, Hubschraubern, Booten oder industriellen Anlagen oder zur Bedienung von Waschmaschinen, Küchengeräten, Radios, Fotoapparaten, Kamerasystemen, Mischpulte, Lichtanlagen, HiFi-Anlagen, Smart Devices, Laptops, PCs, Smartwatches oder anderen Geräten.

Magnetorheologische Fluide weisen beispielsweise in einem Öl verteilt feinste ferromagnetische Partikel wie beispielsweise Carbonyleisenpulver auf. In magnetorheologischen Flüssigkeiten werden kugelförmige Partikel mit einem herstellungsbedingten Durchmesser von 1 bis 10 Mikrometer verwendet, wobei die Partikelgröße nicht einheitlich ist. Wird ein solches magnetorheologisches Fluid mit einem Magnetfeld beaufschlagt, so verketten sich die Carbonyleisenpartikel des magnetorheologischen Fluides entlang der Magnetfeldlinien, sodass die rheologischen Eigenschaften des magnetorheologischen Fluides (MRF) abhängig von Form und Stärke des Magnetfeldes erheblich beeinflusst werden.

Mit der WO 2012/034697 A1 ist eine magnetorheologische Übertragungsvorrichtung bekannt geworden, die zwei koppelbare Komponenten aufweist, deren Kopplungsintensität beeinflussbar ist. Zur Beeinflussung der Kopplungsintensität ist ein Kanal mit einem magnetorheologischen Medium vorgesehen. Über ein Magnetfeld wird das magnetorheologische Medium in dem Kanal beeinflusst. In dem Kanal sind Drehkörper vorgesehen, an denen spitzwinklige und das magnetorheologische Medium enthaltende Bereiche vorgesehen sind. Der Kanal oder wenigstens ein Teil davon ist mit dem Magnetfeld der Magnetfelderzeugungseinrichtung beaufschlagbar ist, um die Partikel wahlweise zu verketten und mit dem Drehkörper zu verkeilen oder freizugeben. Diese magnetorheologische Übertragungsvorrichtung kann auch an einem Drehknopf zur Bedienung von technischen Geräten eingesetzt werden. Eine solche magnetorheologische Übertragungsvorrichtung funktioniert und erlaubt die Übertragung von recht hohen Kräften oder Momenten bei gleichzeitig relativ kleiner Bauform. Die Offenbarung der WO 2012/034697 A1 wird vollständig mit in diese Anmeldung aufgenommen.

Mit der WO 2017/001696 A1 und der WO 2017/001697 A1 ist je eine haptische Bedieneinrichtung bekannt geworden, bei der an einem Bedienknopf ein Display angeordnet ist. Durch eine Hohlwelle können dem Display die benötigten Kabel für Strom und Daten zugeführt werden. Dafür muss die Bohrung in der Hohlwelle habe einen genügend großen Durchmesser aufweisen. Der Nachteil einer Hohlwelle ist auch, dass die Abdichtung der Welle an beiden Enden erfolgen muss, da im Inneren die Vorrichtung angeordnet ist, um die Drehbewegung gesteuert zu beeinflussen. Durch die Dichtungen an beiden Enden der Wellen erhöht sich die Dichtungsanzahl auf zwei, wodurch die Grundreibung zunimmt. Ein weiterer Nachteil ist, dass durch den größeren Wellendurchmesser ein größerer Dichtungsdurchmesser und somit ein größerer Reibradius vorliegt, der das Grundmoment ebenfalls nicht unwesentlich erhöht. Ein besonders niedriges Grundmoment ist bei vielen Anwendungen aber sehr vorteilhaft und wird oftmals benötigt, damit die benötigte Bedienkraft "im Leerlauf (Grunddrehmoment)" klein bleibt. Anderenfalls kann es zu Ermüdungserscheinung beim Bediener kommen. Auch die Offenbarung der WO 2017/001696 A1 wird vollständig mit in diese Anmeldung aufgenommen.

Es ist deshalb die Aufgabe der vorliegenden Erfindung, eine haptische Bedieneinrichtung mit einer magnetorheologischen Übertragungsvorrichtung zu Verfügung zu stellen, womit ein möglichst niedrigeres Grundmoment im Leerlauf ermöglicht wird, wobei insbesondere ein feststehendes Mittelteil vorgesehen ist.

Diese Aufgabe wird gelöst durch eine haptische Bedieneinrichtung mit den Merkmalen des Anspruchs 1. Bevorzugte Weiterbildungen der Erfindung sind Gegenstand der Unteransprüche. Weitere Vorteile und Merkmale der vorliegenden Erfindung ergeben sich aus der allgemeinen Beschreibung und der Beschreibung der Ausführungsbeispiele.

Eine erfindungsgemäße haptische Bedieneinrichtung umfasst eine Grundplatte oder einen Grundkörper, wobei eine solche Grundplatte in bevorzugten Ausgestaltungen auch als Halterung ausgebildet sein kann. Die haptische Bedieneinrichtung umfasst ein mit der Grundplatte verbundenen feststehenden Mittelteil und einen um das feststehende Mittelteil herum drehbaren und hohl ausgebildeten Drehknopf und eine magnetorheologische Übertragungsvorrichtung zur gezielten Beeinflussung einer Drehbewegung des Drehknopfes. Insbesondere wird mit der magnetorheologischen Übertragungsvorrichtung eine Drehbewegung des Drehknopfes gezielt abgebremst. Die (magnetorheologische) Übertragungsvorrichtung umfasst zwei relativ zueinander drehbare Komponenten, von denen eine Komponente als relativ zu der Grundplatte drehbare Bremskomponente (auch Drehkomponente genannt) ausgebildet ist. Das feststehende Mittelteil ist mit einem Tragarm (oder zwei oder mehr Tragarmen) an der Grundplatte befestigt. Der Tragarm ist benachbart zu der Übertragungsvorrichtung angeordnet. Der Tragarm und die Übertragungsvorrichtung sind radial innerhalb des Drehknopfes aufgenommen. Der Tragarm ist exzentrisch zu dem Drehknopf angeordnet. Der Drehknopf ist über eine Koppeleinrichtung mit der drehbaren Bremskomponente drehfest gekoppelt.

Insbesondere ist die Übertragungsvorrichtung vollständig im Inneren des Hohlraums des Drehknopfes aufgenommen.

Die erfindungsgemäße haptische Bedieneinrichtung hat viele Vorteile. Ein erheblicher Vorteil der erfindungsgemäßen Bedieneinrichtung besteht darin, dass das stehende Mittelteil die Anordnung einer feststehenden Benutzerschnittstelle ermöglicht, die sich nicht mit dem Drehknopf mitdreht. Das feststehende Mittelteil ist radial innerhalb des Drehknopfes und benachbart zu der Übertragungsvorrichtung aufgenommen, sodass das feststehende Mittelteil eine Drehbewegung der Übertragungsvorrichtung nicht beeinflusst.

Die Übertragungsvorrichtung und das Mittelteil sind vorzugsweise benachbart zueinander und/oder nebeneinander und radial innerhalb des Drehknopfes aufgenommen.

Besonders bevorzugt sind der Tragarm und die Übertragungsvorrichtung nebeneinander angeordnet. Der Tragarm ist deshalb nicht innerhalb der Übertragungsvorrichtung angeordnet, sondern vollständig daneben. Der Tragarm und die Übertragungsvorrichtung durchdringen sich nicht.

Der Tragarm und die Übertragungsvorrichtung sind vorzugsweise exzentrisch zueinander und/oder exzentrisch zu dem Drehknopf angeordnet. Das bedeutet, dass Symmetrieachsen des Tragarms und der Übertragungsvorrichtung voneinander beabstandet sind. Die Symmetrieachsen sind besonders bevorzugt radial innerhalb des Drehknopfes angeordnet.

Vorzugsweise ist in dem Hohlraum des Drehknopfes die Übertragungsvorrichtung wenigstens teilweise und insbesondere vollständig untergebracht. Die Übertragungsvorrichtung und das Mittelteil sind benachbart zueinander, aber nicht ineinander verschachtelt untergebracht. Unter einer Beeinflussung im Sinne der vorliegenden Erfindung ist insbesondere eine Abbremsung der Drehbewegung des Drehknopfes zu verstehen (Bremsmoment).

In einer einfachen Ausgestaltung umfasst eine andere haptische Bedieneinrichtung einen hohl ausgebildeten Drehknopf und eine magnetorheologische Übertragungsvorrichtung zur gezielten Beeinflussung und insbesondere Abbremsung einer Drehbewegung des Drehknopfes. Dabei ist Drehknopf über eine Koppeleinrichtung mit der Übertragungsvorrichtung drehfest gekoppelt. Die Bedieneinrichtung kann eine Grundplatte umfassen, an der die magnetorheologische Übertragungsvorrichtung und die Koppeleinrichtung angeordnet und/oder befestigt sind.

In bevorzugten Ausgestaltungen der zuvor beschriebenen Bedieneinrichtung ist der Drehknopf über die Koppeleinrichtung mit der drehbaren Bremskomponente derart drehfest gekoppelt, dass sich bei der Drehbewegung des Drehknopfes eine räumliche Ausrichtung des Drehknopfes und der Bremskomponente zueinander ändert. Dabei umfasst eine räumliche Ausrichtung auch eine winkelmäßige Orientierung, sodass unterschiedliche winkelmäßige Orientierungen auch unterschiedliche räumliche Ausrichtungen im Sinne der vorliegenden Anmeldung sind.

Vorzugsweise umfasst die Koppeleinrichtung Koppelmittel an dem Drehknopf und der drehbaren Bremskomponente. Es können noch weitere Koppelmittel vorgesehen sein. Beispielsweise kann ein weiteres Koppelmittel vorgesehen sein, welches einerseits in Kontakt mit dem Koppelmittel an dem Drehknopf und andererseits in Kontakt mit dem Koppelmittel an der Bremskomponente ist. Möglich ist es auch, dass noch mehr Koppelmittel eingesetzt werden, die dann insgesamt eine Kopplung des Drehknopfes mit der drehbaren Bremskomponente bewirken.

Es ist bevorzugt, dass die Koppeleinrichtung Verzahnungen, Zahnräder, Reibflächen, Riemen, Ketten, Getriebe und/oder Planetengetriebe und dergleichen mehr umfasst. In einer einfachen Ausgestaltung kann die Koppeleinrichtung aus zwei im Eingriff miteinander stehenden Zahnrädern oder Reibflächen von Reibrädern gebildet werden, die eine drehfeste Kopplung bewirken.

Vorzugsweise ist an einer Innenkontur des Drehknopfes eine Innenverzahnung und es ist an einer Außenkontur der drehbaren Komponente eine mit der Innenverzahnung gekoppelte Außenverzahnung ausgebildet. Die Kopplung des Drehknopfes mit der drehbaren Bremskomponente kann über einen direkten Eingriff erfolgen oder beispielsweise über ein Koppelmittel wie ein Zahnrad oder eine Kette oder dergleichen bewirkt werden.

Vorzugsweise sind axial durch den Drehknopf elektrische Kabel durchgeführt. Die elektrischen Kabel können Anschlusskabel für die Stromversorgung, Steuerkabel und Kommunikationsleitungen und dergleichen mehr umfassen. Auch eine Kombination aus all diesen Kabelgattungen ist möglich, wodurch die Durchführungsöffnung entsprechend groß sein muss. Evtl. muss auch ein fix mit dem Kabel verbundener Stecker (Kontakt) bei der Montage durchgeführt werden, was entsprechend viel Platz benötigt.

In einer bevorzugten Ausgestaltung umfasst das Mittelteil einen Tragarm, der an einem Ende (mittelbar oder unmittelbar) mit der Grundplatte verbunden ist. Am anderen Ende des Tragarms ist vorzugsweise ein Trägerteil angeordnet. Der Tragarm erstreckt sich vorzugsweise axial durch den Drehknopf. Das Trägerteil kann zum Tragen verschiedener Einheiten und Einrichtungen dienen.

Erfindungsgemäß ist der Tragarm exzentrisch zu dem Drehknopf angeordnet. Der Tragarm dient insbesondere (wenigstens auch) zur Führung der elektrischen Kabel. Die elektrischen Kabel können an den Tragarm befestigt sein. Möglich ist es auch, dass die elektrischen Kabel oder einige elektrische Kabel durch den hohlen Tragarm durchgeführt sind. Dazu weist der Tragarm vorzugsweise ein Hohlraum oder wenigstens einen Hohlraum auf.

Vorzugsweise ist in dem Trägerteil wenigstens eine Beleuchtungseinheit aufgenommen. Besonders bevorzugt ist in einem Trägerteil wenigstens eine Benutzerschnittstelle aufgenommen. Eine solche Benutzerschnittstelle kann ein Bedienpanel, ein Display, ein 3D Display, ein berührungsempfindliches Display (Touchdisplay) mit oder ohne haptischem Feedback und/oder wenigstens einen Sensor umfassen. Beispielsweise kann an der Benutzerschnittstelle ein Sensor wie ein Fingerabdrucksensor oder eine Kamera oder dergleichen vorgesehen sein, um den Fingerabdruck eines Benutzers zu registrieren und zu erkennen. Eine visuelle Kamera, u.a. mit kamerabasierten Objekterkennung, kann ebenfalls zur Erkennung des Benutzers oder Benutzerabläufe eingesetzt werden. Ein Bedienpanel kann als Touchpanel ausgeführt sein und zur Eingabe von Befehlen und von Gesten dienen. Die Einheit im stehenden Mittelteil kann sich bei Annäherung oder dem Weggehen des Benutzers (z.B. Hand; Finger) ein- und/oder ausschalten.

Unter visueller Kamera wird auch das maschinelles Sehen oder Bildverstehen verstanden, im Allgemeinen die computergestützte Lösung von Aufgabenstellungen, die sich an den Fähigkeiten des menschlichen visuellen Systems orientieren. Eine Methode kann die 3D-Objekterkennung für eine zuverlässigere Erkennung von 3D-Objekten in der realen Umgebung sein (3D Objekterkennung). Dabei geht es speziell um die Erfassung von Objekten innerhalb einer 3D-Punktwolke, die u.a. per Lidar-Sensoren aufgezeichnet wird.

Hiermit sollen nicht nur Bewegungen (Gesten) erkannt werden, sondern diese auch Personen zugeordnet und daraus optimierte Bedienmuster /Bedienführung erstellt werden. Zum Beispiel bei einem Fahrzeug: Verfährt die Bedienhand von links nach rechts, so ist es der Fahrer. Kommt die Hand von rechts nach links, so ist es der Beifahrer (bei links angeordneten Lenkrädern). Der Beifahrer bedient andere Menüs und benötigt eine andere Bedienführung wie der Fahrer eines Fahrzeuges. Zudem bedient der Beifahrer das Bedienelement mit der linken Hand, was für einem Rechtshänder schwieriger ist. Das Bedienelement kann sich hierauf einstellen, indem z.B. die Schaltmomente oder Schrittwinkel erhöht werden, da dieser Benutzer in der linken Hand weniger Gefühl bzw. geringere Feinmotorik hat. Dies ist besonders vorteilhaft, wenn einzelne Finger erkannt und die Bedienung diesen angepasst wird.

Eine visuelle Kamera kann zudem schon die Person bevor der Bedienung erkennen und im System hinterlegte Bedienmuster abrufen bzw. zuordnen. Jugendliche oder Kinder können so andere Bedienmöglichkeiten (Userführung), Menüs usw. beim Betätigen des Bedienelementes erhalten, als z.B. Erwachsene. Ein Pilot eines Flugzeuges bekommt so gleich andere Bedienmuster zugeordnet wie ein Copilot.

Es kann auch erkannt werden, ob der Benutzer Handschuhe an hat oder nicht. Beides verändert das notwendige haptische Feedback zur optimalen Benutzerführung.

Das System ist lernfähig (e.g. fuzzy logic) und kann weitläufig vernetzt sein.

Dadurch wird die Bedienqualität stark erhöht und Fehlbedienungen minimiert.

In allen Ausgestaltungen ist es bevorzugt, dass der Drehknopf und die drehbare Bremskomponente separat drehbar gelagert sind. Dabei ist es möglich, dass der Drehknopf und die Bremskomponente über eigenständige Lager wie Gleitlager oder Wälzlager gelagert werden. Möglich ist es aber auch, dass der Drehknopf und die drehbare Bremskomponente in entsprechenden reibungsarmen Führungen drehbar aufgenommen und somit gelagert sind. Insbesondere ist die magnetorheologische Übertragungsvorrichtung, die in bevorzugten Ausgestaltungen auch als Bremseinrichtung bezeichnet werden kann, innerhalb des Drehknopfes angeordnet. Die drehbare Bremskomponente und der Drehknopf können ineinander verschachtelt aufgenommen sein.

Vorzugsweise ist eine der Komponenten der Übertragungsvorrichtung als feststehende Bremskomponente ausgebildet. Denkbar ist es aber auch, dass beide Komponenten der Übertragungsvorrichtung jeweils drehbar ausgestaltet sind.

Vorzugsweise ist die feststehende Bremskomponente radial innen angeordnet und von der drehbaren Bremskomponente umgeben. Die drehbare Bremskomponente kann ein geschlossenes Bremsgehäuse bilden.

Die feststehende Bremskomponente umfasst insbesondere eine mit der Grundplatte verbundene Welle, die dann insbesondere von der drehbaren Bremskomponente umgeben wird. Die Welle kann dünn und massiv ausgestaltet sein und muss nicht hohl ausgebildet sein. Vorzugsweise werden durch die Welle keine Kabel oder Leitungen geführt.

Es bevorzugt, dass die Übertragungsvorrichtung genau einen Wellenausgang aufweist, welcher über genau eine berührende Dichtung abgedichtet ist. Die berührende Dichtung ist insbesondere zwischen der drehbaren Bremskomponente und der feststehenden Bremskomponente angeordnet. Die berührende Dichtung kann als Dichtring ausgeführt und kannst beispielsweise als 0-Ring, Lippendichtung, Abstreifring oder als Quadring ausgeführt sein.

In bevorzugten Ausgestaltungen weist die Übertragungsvorrichtung auf einer Seite den Wellenausgang und auf der gegenüberliegenden Seite eine geschlossene Wandung auf. Die drehbare Bremskomponente bildet dann insgesamt ein geschlossenes Bremsgehäuse mit einem Wellenausgang.

In allen Ausgestaltungen ist es möglich und bevorzugt, dass der Drehknopf insgesamt etwa hülsenförmig ausgebildet ist.

Der Drehknopf umfasst vorzugsweise zwei axial gegeneinander verschiebbare Rohrteile, welche insbesondere über Koppelstifte oder Führungen oder dergleichen drehfest miteinander gekoppelt sind. Insbesondere sind die verschiebbaren Rohrteil über eine Vorbelastungseinrichtung in die axialausgefahrene Stellung vorbelastet.

Vorzugsweise ist der Drehknopf bzw. ein Rohrteil über wenigstens ein Lager an der Grundplatte gelagert. Der Drehknopf und/oder ein Rohrteil des Drehknopfes ist insbesondere axial verschiebbar (Push / Pull). Vorzugsweise ist der Drehknopf und/oder ein Teil des Drehknopfes axial verschiebbar (Push/Pull bzw. +/- Z) und gibt im Bereich der Endposition eine haptische Rückmeldung. Es ist auch möglich, dass andere Druckfunktionen in den Drehknopf integriert sind, sodass bei einer axialen Betätigung des Drehknopfes ein Signal ausgelöst und insbesondere eine haptische Rückmeldung zurückgegeben wird. Ein Ziehen am Knopf (Pull) ist auch möglich. Ebenso kann das gesamte Bedienelement zusätzlich seitlich verfahren werden (X und Y Richtung/Bewegung).

Vorzugsweise ist dem Drehknopf wenigstens ein Sensor zur Erfassung einer axialen Betätigung in Form beispielsweise eines Betätigungssensors und/oder einen Sensor zur Erfassung einer Winkelveränderung oder einer absoluten Winkelposition zugeordnet.

In allen Ausgestaltungen ist es bevorzugt, dass eine Differenz zwischen einem lichten Innendurchmesser des Drehknopfes und einem Außendurchmesser der Übertragungsvorrichtung größer 3 mm und kleiner 50 mm beträgt. Vorzugsweise liegt die Differenz zwischen 10 mm und 30 mm.

In bevorzugten Ausgestaltungen beträgt ein Außendurchmesser des Drehknopfes zwischen 10 mm und 90 mm und insbesondere zwischen 20 mm und 90 mm. Eine Höhe des Drehknopfes liegt vorzugsweise zwischen 10 mm und 60 mm.

In allen Ausgestaltungen ist es bevorzugt, dass die Übertragungsvorrichtung einen Magnetkreis und eine Magnetfelderzeugungseinrichtung mit wenigstens einer elektrischen Spule und einem Spalt zwischen der feststehenden Bremskomponente und der drehbaren Bremskomponente umfasst der Spalt bzw. Kanals zwischen den beiden Komponenten der Übertragungsvorrichtung ist vorzugsweise mit einem magnetorheologischen Medium versehen oder ausgerüstet.

Besonders bevorzugt sind zwischen der feststehenden Bremskomponente und der drehbaren Bremskomponente bzw. zwischen den beiden relativ zueinander drehbaren Komponenten der Übertragungsvorrichtung Drehkörper angeordnet, die insbesondere als Magnetfeldkonzentratoren dienen. Die Drehkörper sind insbesondere von dem magnetorheologischen Medium umgeben. Die Funktionsweise der Beeinflussung der Drehbewegung über Drehkörper in einem Spalt bzw. Kanals zwischen zwei Komponenten einer magnetorheologischen Übertragungsvorrichtung ist in der WO 2012/034697 A1 und in der WO 2017/001696 A1 beschrieben und wird angepasst auf die hier vorliegende Konstruktion in ähnlicher oder gleicher Weise eingesetzt.

Ein erheblicher Vorteil der Erfindung besteht auch darin, dass das ohnehin niedrige Grundmoment noch weiter reduziert werden kann, da regelmäßig eine Übersetzung der Drehzahl des Drehknopfes erfolgt. In einer konkreten Ausgestaltung beträgt das Verhältnis 3:1 und kann aber auch größer werden und 4:1 oder kleiner mit 2:1 erreichen oder überschreiten. Das wirksame Grundmoment an der Übertragungsvorrichtung wird dadurch entsprechend reduziert, was zur Leichtgängigkeit nochmals erheblich beiträgt.

Weitere Vorteile und Merkmale der vorliegenden Erfindung ergeben sich aus den Ausführungsbeispielen, welche im Folgenden mit Bezug auf die beiliegenden Figuren erläutert werden.

In den Figuren zeigen:
- Figur 1: eine schematische perspektivische Explosion Darstellung einer erfindungsgemäßen haptischen Bedieneinrichtung;
- Figur 2: eine Seitenansicht der Explosionsdarstellung der haptischen Bedieneinrichtung nach Figur eins;
- Figur 3: eine haptische Bedieneinrichtung gemäß der vorliegenden Erfindung;
- Figur 4: einen stark schematischen Querschnitt durch einen Drehkörper einer haptischen Bedieneinrichtung gemäß der Figuren 1-3;
- Figur 5: einen Querschnitt durch eine haptische Bedieneinrichtung;
- Figur 6: eine stark schematische geschnittene Draufsicht auf eine haptische Bedieneinrichtung;
- Figur 7: einen weiteren Querschnitt durch eine haptische Bedieneinrichtung;
- Figuren 8-10: schematische geschnittene Draufsicht auf weitere haptischen Bedieneinrichtungen;
- Figur 11a-11c: mögliche Drehmomentverläufe über dem Drehwinkel einer erfindungsgemäßen haptischen Bedieneinrichtung; und
- Figur 12: einen Querschnitt durch einen Teil einer weiteren haptischen Bedieneinrichtung.

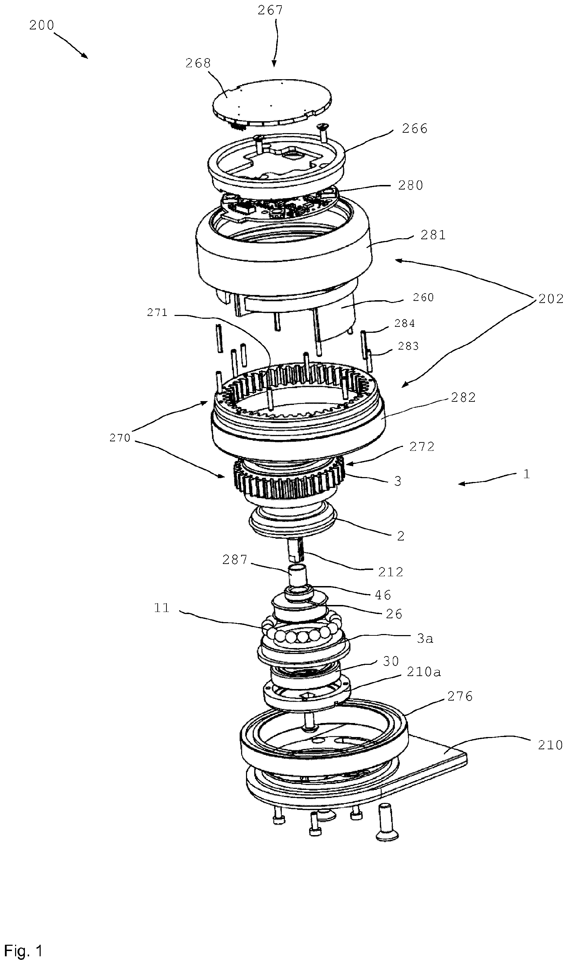

Figur 1 zeigt eine schematische perspektivische Explosionsdarstellung einer erfindungsgemäßen haptischen Bedieneinrichtung 200, die einen Grundkörper 210 bzw. eine Grundplatte 210 aufweist. Die Aufnahme 210a kann einstückig mit der Grundplatte oder aber als separates Teil ausgebildet sein und dient zur Aufnahme der magnetorheologischen Übertragungsvorrichtung 1.

Die magnetorheologische Übertragungsvorrichtung 1 umfasst hier eine drehbare Bremskomponente 3, die aus dem Hauptteil der drehbaren Bremskomponente 3 und dem unteren Teil 3a gebildet wird. Bei der Montage werden beide Teile 3, 3a verpresst wird und bilden somit ein geschlossenes Gehäuse bzw. die drehbare Bremskomponente 3 insgesamt. In der drehbaren Bremskomponente 3 ist die feststehende Bremskomponente bzw. Komponente 2 aufgenommen, die über eine feststehende Welle 212 aus der drehbaren Komponente 3 herausgeführt wird. Die feststehende Welle 212 wird an der Grundplatte 210 bzw. an der Aufnahme 210a befestigt. Beispielsweise kann die Welle mit der Aufnahme 210a oder der Grundplatte 210 über eine Schraube verschraubt werden, sodass die Welle 212 und damit die feststehende Bremskomponente 2 fest an der Grundplatte 210 aufgenommen ist. Die drehbare Bremskomponente 3 bzw. 3a wird über einen Wälzlager 30 drehbar gegenüber der Grundplatte 210 bzw. der Aufnahme 210a aufgenommen. Über die aus magnetisch leitendem Material bestehende Welle 212 wird bei der Montage eine Schutzhülse 287 aus einem harten oder gehärteten oder beschichteten (z.B. Hartchromschicht) Material geschoben. Die Dichtung 46 in dem Teil 3a wirkt auf die Schutzhülse 287 ein, sodass sich auch im Betrieb keine Riefen an der feststehenden Welle 212 ergeben.

Die drehbare Bremskomponente 3 bzw. deren oberer Teil verweist auf dem Außenumfang eine Außenverzahnung 272 auf, die im montierten Zustand mit der Innenverzahnung 271 des Drehknopfes 202 kämmt. Dadurch wird eine Drehbewegung des Drehknopfes 202 auf die drehbare Bremskomponente 3 übertragen.

Der Drehknopf 202 besteht hier im Wesentlichen aus zwei Teilen, nämlich einem oberen Rohrteil 281 und einem unteren Rohrteil 282, in dem hier die Innenverzahnung 271 ausgebildet ist.

Die beiden Rohrteile 281 und 282 werden drehfest miteinander verbunden. Das kann beispielsweise über Koppelstifte 283 erfolgen, die in entsprechende Aufnahmen in den Rohrteilen 281 und 282 eingesetzt werden. In die Koppelstifte 283 können Federn 284 eingesetzte werden, die somit die Rohrteile 281, 282 in eine axial voneinander entfernte Grundposition vorbelasten. Statt der Koppelstifte, welche in Bohrungen eingreifen, können auch Linearführungen verwendet werden (Kugelumlaufführungen, Linearkugelführungen, Profilführungen...).

Im inneren Hohlraum 261 des Drehknopfes 202 ist das feststehende Mittelteil 260 angeordnet und mit der Grundplatte 210 verbunden. Das stehende Mittelteil 260 umfasst einen Tragarm 263, der sich von der Grundplatte 210 an einem Ende bis zum oberen Ende erstreckt, an dem ein Trägerteil 264 ausgebildet ist. Das Trägerteil 264 dient zum Tragen der Platine 280 und der darauf angeordneten Beleuchtungseinheit 266. Als Oberstes ist hier die Benutzerschnittstelle 267 angeordnet, die ein Bedienpanel der haptischen Bedieneinrichtung zur Verfügung stellen kann.

Beispielsweise kann das Bedienpanel auch als Display oder als berührungsempfindliches Display ausgebildet sein.

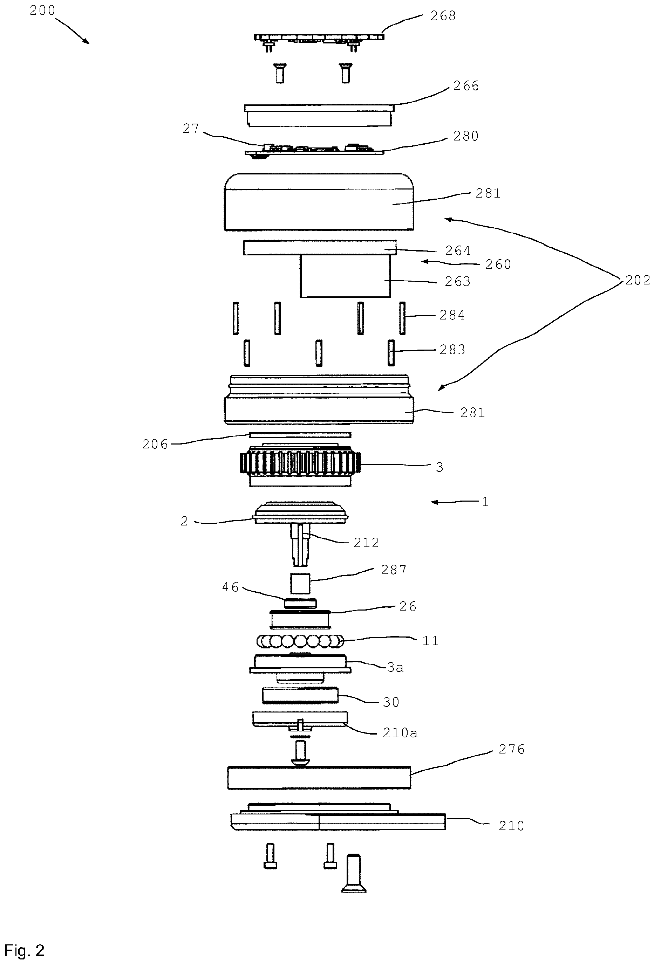

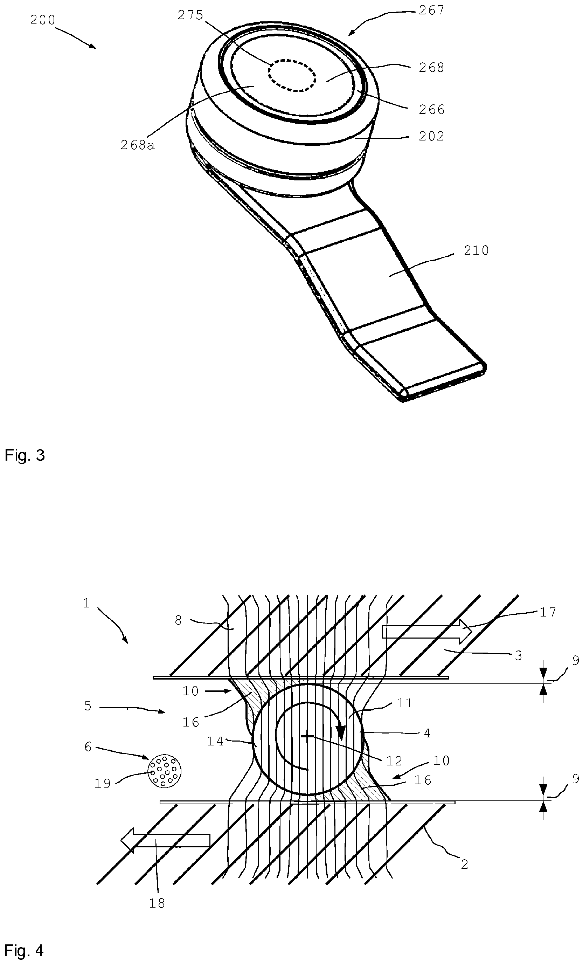

Figur 2 zeigt eine Seitenansicht der haptischen Bedieneinrichtung 200 aus Figur 1 in einer Explosionsdarstellung. Die drehbare Bremskomponente 3 umfasst ein unteres Teil 3a und das obere Teil 3b, welche beide insgesamt als drehbare Komponente 3 bezeichnet werden und welche in sich die feststehende Bremskomponente 2 aufnehmen. Außerdem werden im Inneren der drehbaren Bremskomponente 3 noch die Drehkörper 11 und die Spule 26 inklusive eines Spulenhalters 26a aufgenommen. Der restliche Hohlraum wird durch ein magnetorheologisches Medium 6 (vergleiche Figur 4) ausgefüllt. Die Welle 212 wird nach außen durch die Dichtung 46 abgedichtet, die mit der Schutzhülse 287 zusammenwirkt, die auf der Welle 212 angebracht ist.

Die Rohrteile 281 und 282 ergeben zusammengesetzt den Drehknopf 202, der im Inneren hohl ausgebildet ist und hülsenartig geformt ist. Das bedeutet, dass der Drehknopf 202 sowohl am oberen als auch am unteren axialen Ende jeweils offen ausgebildet ist und keine Wandung aufweist. Am oberen axialen Ende und somit an dem von der Grundplatte 210 entfernten Ende wird die haptische Bedieneinrichtung 200 durch das Bedienpanel 268 abgeschlossen, welches insbesondere berührungsempfindlich oder drucksensitiv ausgebildet ist.

Figur 3 zeigt eine perspektivische Darstellung eines Ausführungsbeispiels einer haptischen Bedieneinrichtung 200, wie sie in den Figuren 1 und 2 in Explosionsdarstellung dargestellt ist. Die Grundplatte 210 kann unterschiedlich lang und verschieden geformt ausgebildet sein. In der Darstellung gemäß Figur 3 ist die haptische Bedieneinrichtung 200 dazu geeignet, vor einem Hintergrund schwebend aufgenommen zu sein. Der Drehknopf 202 mit der Benutzerschnittstelle 267 kann beispielsweise durch eine Beleuchtungseinheit 266 beleuchtet werden. Auf der Oberfläche kann beispielsweise ein Sensor 275 integriert sein. Möglich ist es auch, dass die Oberfläche der Benutzerschnittstelle 267 insgesamt oder zum Teil beispielsweise zur Aufnahme von Bildern geeignet ist, sodass nach der Berührung mit einem Finger beispielsweise ein Fingerabdruck durch die haptische Bedieneinrichtung 200 aufgenommen und erkannt werden kann.

Figur 4 zeigt eine stark schematische Querschnittsansicht einer erfindungsgemäßen magnetorheologischen Übertragungsvorrichtung 1 zur Beeinflussung der Kraftübertragung zwischen zwei Komponenten 2 und 3. Dabei ist zwischen den zwei Komponenten 2 und 3 in Fig. 4 ein Drehkörper 11 als separates Teil 4 vorgesehen. Der Drehkörper 11 ist hier als Kugel 14 ausgebildet. Möglich ist es aber ebenso, Drehkörper 11 als Zylinder oder Ellipsoide, Rollen oder sonstige rotierbare Drehkörper auszubilden. Auch im eigentlichen Sinn nicht rotationssymmetrische Drehkörper wie beispielsweise ein Zahnrad oder Drehkörper 11 mit einer bestimmten Oberflächenstruktur können als Drehkörper verwendet werden. Die Drehkörper 11 werden nicht zur Lagerung gegenüber einander eingesetzt, sondern zur Übertragung von Drehmoment.

Zwischen den Komponenten 2 und 3 der magnetorheologischen Übertragungsvorrichtung 1 ist ein Kanal 5 vorgesehen, der hier mit einem Medium 6 gefüllt ist. Das Medium ist hier ein magnetorheologisches Fluid 20, welches beispielsweise als Trägerflüssigkeit ein Öl umfasst, in dem ferromagnetische Partikel 19 vorhanden sind. Glykol, Fett, dickflüssige Stoffe können auch als Trägermedium verwendet werden, ohne darauf beschränkt zu sein. Das Trägermedium kann auch gasförmig sein bzw. es kann auf das Trägermedium verzichtet werden (Vakuum). In diesem Fall werden lediglich durch das Magnetfeld beeinflussbare Partikel in den Kanal gefüllt.

Die ferromagnetischen Partikel 19 sind vorzugsweise Carbonyleisenpulver, wobei die Größenverteilung der Partikel vom konkreten Einsatzfall abhängt. Konkret bevorzugt ist eine Verteilung Partikelgröße zwischen ein und zehn Mikrometern, wobei aber auch größere Partikel von zwanzig, dreißig, vierzig und fünfzig Mikrometer möglich sind. Je nach Anwendungsfall kann die Partikelgröße aus deutlich größer werden und sogar in den Millimeterbereich vordringen (Partikelkugeln). Die Partikel können auch eine spezielle Beschichtung/Mantel (Titanbeschichtung, Keramik-, Karbonmantel etc.) aufweisen, damit sie die je nach Anwendungsfall auftretenden hohen Druckbelastungen besser aushalten. Die MR-Partikel können für diesen Anwendungsfall nicht nur aus Carbonyleisenpulver (Reineisen), sondern z.B. auch aus speziellem Eisen (härterem Stahl) hergestellt werden.

Der Drehkörper 11 wird durch die Relativbewegung 17 der beiden Komponenten 2 und 3 in Rotation um seine Drehachse 12 versetzt und läuft praktisch auf der Oberfläche der Komponente 3 ab. Gleichzeitig läuft der Drehkörper 11 auf der Oberfläche der anderen Komponente 2, sodass dort eine Relativgeschwindigkeit 18 vorliegt.

Genau genommen hat der Drehkörper 11 keinen direkten Kontakt zur Oberfläche der Komponente 2 und/oder 3 und wälzt sich deshalb nicht direkt darauf ab. Der freie Abstand 9 von dem Drehkörper 11 zu einer der Oberflächen der Komponente 2 oder 3 beträgt z.B. 140 µm. In einer konkreten Ausgestaltung mit Partikelgrößen zwischen 1 µm und 10 µm liegt der freie Abstand insbesondere zwischen 75 µm und 300 µm und besonders bevorzugt zwischen 100 µm und 200 µm.

Der freie Abstand 9 beträgt insbesondere wenigstens das Zehnfache des Durchmessers eines typischen mittleren Partikeldurchmessers. Vorzugsweise beträgt der freie Abstand 9 wenigstens das Zehnfache eines größten typischen Partikels. Durch den fehlenden direkten Kontakt ergibt sich eine sehr geringe(s) Grundreibung/-kraft/- moment beim relativen Bewegen der Komponenten 2 und 3 zueinander.

Wird die magnetorheologische Übertragungsvorrichtung 1 mit einem Magnetfeld beaufschlagt, bilden sich die Feldlinien abhängig vom Abstand zwischen den Drehkörpern 11 und den Komponenten 2, 3 aus. Der Drehkörper besteht aus einem ferromagnetischen Material und z.B. hier aus ST 37 (S235). Der Stahltyp ST 37 hat eine magnetische Permeabilität µr von etwa 2000. Die Feldlinien treten durch den Drehkörper hindurch und konzentrieren sich in dem Drehkörper. An der hier radialen Ein- und Austrittsfläche der Feldlinien an dem Drehkörper herrscht eine hohe Flußdichte in dem Kanal 5. Das dort inhomogene und starke Feld führt zu einer lokalen und starken Vernetzung der magnetisch polarisierbaren Partikel 19. Durch die Drehbewegung des Drehkörpers 11 in Richtung auf den sich bildenden Keil in dem magnetorheologischen Fluid wird die Wirkung stark erhöht und das mögliche Brems- oder Kupplungsmoment wird extrem vergrößert weit über den Betrag hinaus, der normalerweise in dem magnetorheologischen Fluid erzeugbar ist. Vorzugsweise bestehen Drehkörper 11 und Komponente 2, 3 zumindest teilweise aus ferromagnetischem Material, weshalb die magnetische Flussdichte umso höher wird, je kleiner der Abstand zwischen Drehkörper 11 und Komponente 2, 3 ist. Dadurch bildet sich ein im Wesentlichen keilförmiger Bereich 16 im Medium aus, in welchem der Gradient des Magnetfelds zum spitzen Winkel bei der Kontaktstelle bzw. dem Bereich des geringsten Abstands hin stark zunimmt.

Trotz Abstand zwischen Drehkörper 11 und Komponente 2, 3 kann durch die Relativgeschwindigkeit der Oberflächen zueinander der Drehkörper 11 in eine Drehbewegung versetzt werden. Die Drehbewegung ist ohne und auch mit einem wirkenden Magnetfeld 8 möglich.

Wenn die magnetorheologische Übertragungsvorrichtung 1 einem Magnetfeld 8 einer hier in Figur 4 nicht dargestellten Magnetfelderzeugungseinrichtung 7 ausgesetzt ist, verketten sich die einzelnen Partikeln 19 des magnetorheologischen Fluides 20 entlang der Feldlinien des Magnetfeldes 8. Zu beachten ist, dass die in Figur 4 eingezeichneten Vektoren den für die Beeinflussung des MRF 20 relevanten Bereich der Feldlinien nur grob schematisch darstellen. Die Feldlinien treten im Wesentlichen normal auf die Oberflächen der ferromagnetischen Bauteile in den Kanal 5 ein und müssen vor allem im spitzwinkligen Bereich 10 nicht geradlinig verlaufen.

Gleichzeitig wird auf dem Umfang des Drehkörpers 11 etwas Material von dem magnetorheologischen Fluid 20 mit in Rotation versetzt, sodass sich ein spitzwinkliger Bereich 10 zwischen der Komponente 3 und dem Drehkörper 11 ausbildet. Auf der anderen Seite entsteht ein gleicher spitzwinkliger Bereich 10 zwischen dem Drehkörper 11 und der Komponente 2. Die spitzwinkligen Bereiche 10 können beispielsweise bei zylinderförmig ausgestalteten Drehkörpern 11 eine Keilform 16 aufweisen. Durch die Keilform 16 bedingt wird die weitere Rotation des Drehkörpers 11 behindert, sodass die Wirkung des Magnetfeldes auf das magnetorheologische Fluid verstärkt wird, da sich durch das wirkende Magnetfeld innerhalb des spitzwinkligen Bereiches 10 ein stärkerer Zusammenhalt des dortigen Mediums 6 ergibt. Dadurch wird die Wirkung des magnetorheologischen Fluids im angesammelten Haufen verstärkt (die Kettenbildung im Fluid und damit der Zusammenhalt bzw. die Viskosität), was die weitere Rotation bzw. Bewegung des Drehkörpers 11 erschwert.

Durch die Keilform 16 können wesentlich größere Kräfte oder Momente übertragen werden als es mit einem vergleichbaren Aufbau möglich wäre, der nur die Scherbewegung ohne Keileffekt nützt.

Die direkt durch das angelegte Magnetfeld übertragbaren Kräfte stellen nur einen kleinen Teil der durch die Vorrichtung übertragbaren Kräfte dar. Durch das Magnetfeld lässt sich die Keilbildung und somit die mechanische Kraftverstärkung steuern. Die mechanische Verstärkung des magnetorheologischen Effekts kann soweit gehen, dass eine Kraftübertragung auch nach Abschalten eines angelegten Magnetfeldes möglich ist, wenn die Partikel verkeilt wurden.

Es hat sich herausgestellt, dass durch die Keilwirkung der spitzwinkligen Bereiche 10 eine erheblich größere Wirkung eines Magnetfeldes 8 einer bestimmten Stärke erzielt wird. Dabei kann die Wirkung um ein Vielfaches verstärkt werden. In einem konkreten Fall wurde eine etwa zehnmal so starke Beeinflussung der Relativgeschwindigkeit zweier Komponenten 2 und 3 zueinander wie beim Stand der Technik bei MRF Kupplungen beobachtet. Die mögliche Verstärkung hängt von unterschiedlichen Faktoren ab. Gegebenenfalls kann sie durch eine größere Oberflächenrauhigkeit der Drehkörper 11 noch verstärkt werden. Möglich ist es auch, dass auf der Außenoberfläche der Drehkörper 11 nach außen ragende Vorsprünge vorgesehen sind, die zu einer noch stärkeren Keilbildung führen können.

Die Keilwirkung bzw. der Keileffekt verteilt sich flächig auf den Drehkörper 11 und die Komponenten 2 oder 3.

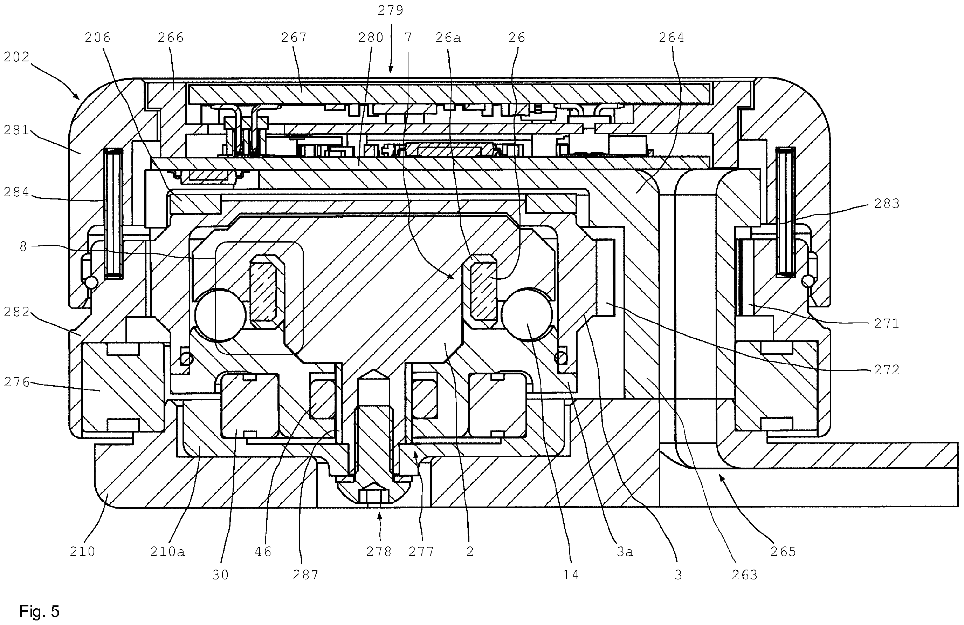

Figur 5 zeigt einen Querschnitt durch eine Ausführungsform einer haptischen Bedieneinrichtung 202. Die haptische Bedieneinrichtung 200 ist auf einer Grundplatte 210 montiert, die hier eine separate Aufnahme 210a für die magnetorheologische Übertragungsvorrichtung 1 umfasst. Die Übertragungsvorrichtung 1 umfasst zwei Komponenten 2, 3, wobei die Komponente 2 als feststehende Bremskomponente ausgebildet ist und mit der Aufnahme 210a verschraubt ist. Die Bremskomponente 2 weist eine hier etwa pilzförmige Gestalt auf und umfasst die Welle 212 und nimmt in dem pilzförmigen Teil die elektrische Spule 26 in einem Spulenhalter 26a als Magnetfelderzeugungseinrichtung 7 auf. Die elektrische Spule 26 ist um die Symmetrieachse der feststehenden Bremskomponente 2 herumgewickelt.

Die drehbare Bremskomponente 3 umfasst ein oberes Teil und ein unteres Teil 3a, die bei der Montage miteinander verpresst werden. Die eingezeichnete Dichtung zwischen den beiden Teilen der drehbaren Bremskomponente 3 dient zur Abdichtung etwaiger Spalte. Denkbar ist auch den Teil 3a nach oben zu verlängern und mit der Verzahnung zu versehen. Der Teil 3 wäre dann als Deckel ausgebildet.

In der drehbaren Bremskomponente 3 sind Drehkörper 11 aufgenommen, die in entsprechenden Aufnahmen der feststehenden Bremskomponente 2 und der drehbaren Bremskomponente 3 geführt werden. Das Magnetfeld 8 ist beispielhaft an einem Drehkörper 11 eingezeichnet und tritt durch den Drehkörper 11 hindurch, wobei die Drehkörper 11 hier als Kugel 14 ausgebildet sind. Die Kugeln 14 sind in einem Spalt 5 angeordnet, der mit einem magnetorheologischen Medium und insbesondere einem magnetorheologischen Fluid gefüllt ist.

Der Drehknopf 202 weist einen größeren Innendurchmesser auf und weist, wie in den Figuren 1 und 2 zu sehen, eine Innenverzahnung 271 auf dem Innenumfang auf, die hier auf der linken Seite im Eingriff mit einer Außenverzahnung 272 der drehbaren Bremskomponente 3 steht.

Dadurch bildet sich hier auf der rechten Seite ein freier Zwischenraum, in dem das feststehende Mittelteil 260 angeordnet ist, welches sich von der Grundplatte aus bis oberhalb der drehbaren Bremskomponente 3 erstreckt. Oberhalb der drehbaren Bremskomponente 3 bildet das feststehende Mittelteil 260 ein Trägerteil 264 aus, auf dem die Beleuchtungseinheit 266, die Benutzerschnittstelle 267 und ein Bedienpanel 168 angebrachte sind.

Die Rohrteile 281 und 282 des Drehknopfes 202 sind hier über Koppelstifte 283 miteinander gekoppelt. In den hohlen Koppelstiften 283 sind Federn 284 angeordnet, die die beiden Rohrteile in eine axiale voneinander beanstandete Grundposition vorbelasten.

Der Drehknopf 202 ist über einen Wälzlager 276 direkt auf der Grundplatte 210 gelagert. Die Übertragungsvorrichtung 1 bzw. die drehbare Bremskomponente 3 ist über ein Lager 30, welches ebenfalls als Wälzlager ausgeführt ist, auf der Grundplatte 210 bzw. auf der Aufnahme zu 210a drehbar gelagert.

Ein Winkelsensor 206 erfasst eine Winkelposition des Drehknopfes 202. Bei einer axialen Betätigung des Drehknopfes 202 wird ein Betätigungssensor 204 aktiviert, der hier in Figur 5 nicht zu erkennen ist.

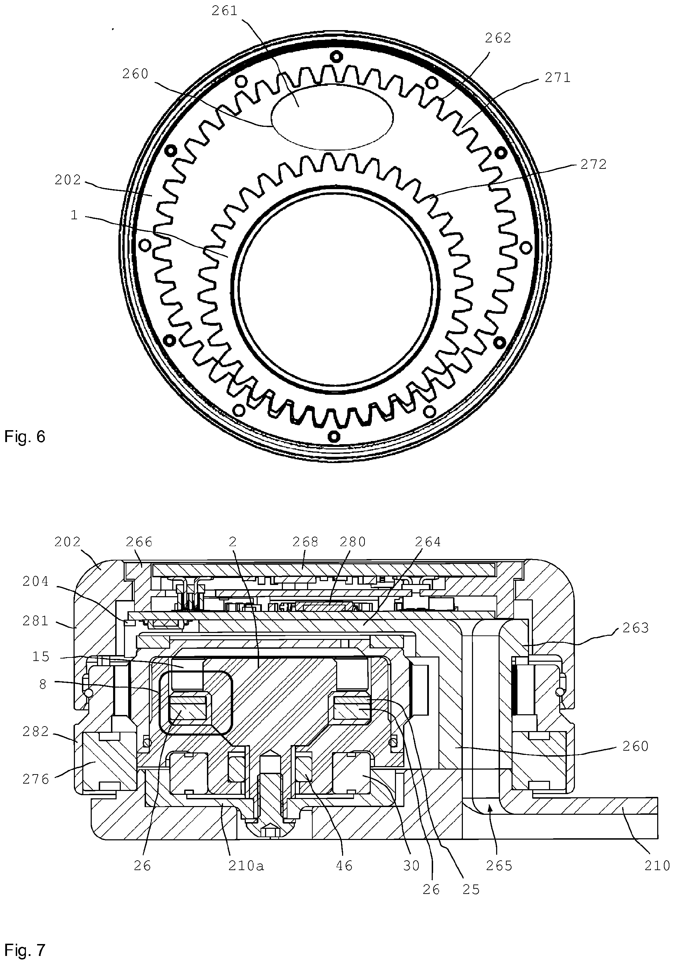

Figur 6 zeigt einen schematischen Querschnitt in einer Draufsicht, wobei hier die unterschiedlich großen Durchmesser des Drehknopfes 202 und der Übertragungsvorrichtung 1 zu erkennen sind. Die Übertragungsvorrichtung 1 ist über eine Koppeleinrichtung 270 drehfest mit dem Drehknopf 202 gekoppelt, sodass eine Drehung des Drehknopfes 202 unmittelbar in eine Drehung der Übertragungsrichtung 1 bzw. in eine Drehung der drehbaren Bremskomponente 3 der Übertragungsvorrichtung 1 umgesetzt wird. Hier umfasst die Koppeleinrichtung 270 eine Innenverzahnung 271 an dem Drehknopf 202 und eine Außenverzahnung 272 an der drehbaren Bremskomponente 3. Erkennbar ist hier auch der Freiraum für das feststehende Mittelteil 260, welches somit von der Grundplatte aus axial durch den Drehknopf 202 durchgeführt werden kann, ohne die drehende Bewegung des Drehknopfes oder der drehbaren Bremskomponente zu behindern. Im inneren Hohlraum 261 des feststehenden Mittelteil 260 können elektrische Kabel 241 durchgeführt werden, um die Benutzerschnittstelle 267, die Beleuchtungseinheit 266 oder das Bedienpanel 268 mit Strom zu versorgen und um Kommunikationsleitungen zur Verfügung zu stellen.

Figur 7 zeigt eine abgewandelte Ausführungsform der haptischen Bedieneinrichtung 200 aus Figur 5, wobei hier auch der Betätigungssensor 204 eingezeichnet ist. Im Unterschied zum Ausführungsbeispiel gemäß Figur 5 sind im Ausführungsbeispiel nach Figur 7 zylinderförmige oder rollenförmige Drehkörper 11 vorgesehen. Die feststehende Bremskomponente 2 kann im Bereich des Magnetfeldüberganges zu den Drehkörpern 11 eine Eindrehung (Nut) aufweisen. Diese Nut kann leer sein, aber auch eine Reibelement in Form eines Gummiringes (O-Ring; Ringschnur; Rechteckring...) enthalten. Damit kann eine Zwangsdrehung der Drehkörper 11 erreicht werden. Wie bei Figur 5 beschrieben kann auch bei der Ausführung nach Figur 7 die Verzahnung ein Teil des kugelgelagerten Innenkörpers 3a sein und durch einen Deckel verschlossen werden.

Des Weiteren ist beispielhaft ein Dauermagnet 25 eingezeichnet, der ein dauerhaftes Magnetfeld zur Verfügung stellen kann. Das Magnetfeld des Dauermagneten 25 kann durch das Magnetfeld der Elektrospule 26 beeinflusst und bei entsprechender Polung auch aufgehoben werden. Möglich ist es auch, dass der Dauermagnet 25 durch elektrische Impulse der elektrischen Spule 26 eingestellt wird.

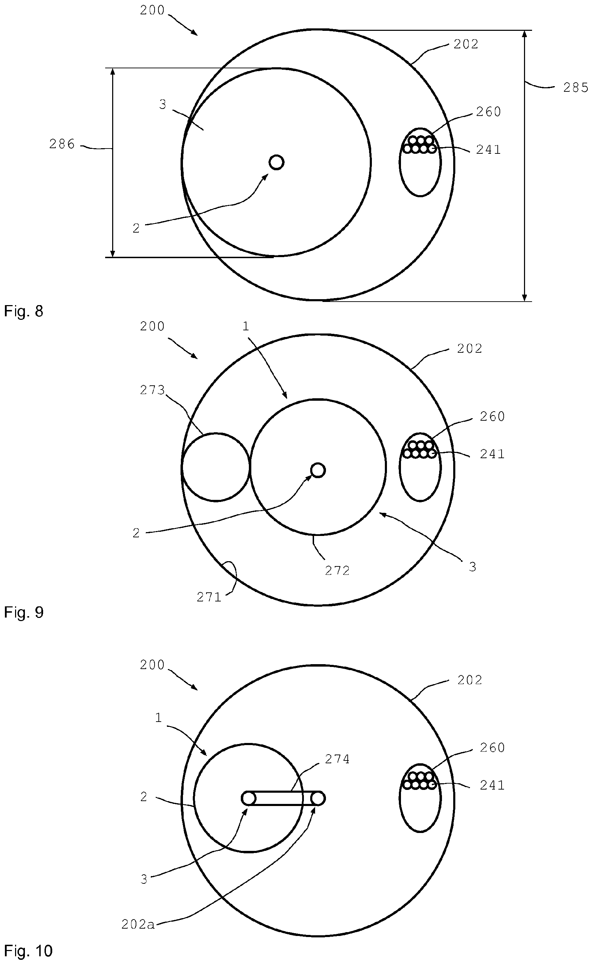

Figur 8 zeigt einen schematischen Querschnitt in einer Draufsicht, wobei hier die haptische Bedieneinrichtung 200 wiederum über einen Drehknopf 202 und ein Übertragungsvorrichtung 1 mit einer äußeren drehbaren Bremskomponente 3 und einer inneren feststehenden Bremskomponente 2 verfügt. Durch ein feststehendes Mittelteil 260 können elektrische Kabel 241 zu dem nicht erkennbaren Bedienpanel geführt werden. Für das feststehende Mittelteil 260 steht maximal eine Breite zu Verfügung, die sich durch eine Differenz des Innendurchmessers 285 des Drehknopfes 202 und des Außendurchmessers 286 der Übertragungsvorrichtung 1 ergibt.

In der Darstellung gemäß Figur 8 kann die Koppeleinrichtung 270 auch durch Reibflächen auf der Außenfläche der drehbaren Bremskomponente 3 und der Innenfläche des Drehknopfes 202 gebildet werden.

Figur 9 zeigt eine weitere Variante, wobei hier die Übertragungsvorrichtung 1 wieder eine äußere drehbare Bremskomponente 3 aufweist. Die drehbare Bremskomponente 3 ist um die zentrale Symmetrieachse der Übertragungsvorrichtung 1 und des Drehknopfes 202 drehbar. Die Koppeleinrichtung 270 umfasst hier beispielsweise ein Zahnrad 273 als Koppelmittel zwischen der Innenverzahnung des Drehknopfes 202 und der Außenverzahnung der Übertragungsvorrichtung 1. Dadurch steht auch genügend Bauraum für ein feststehendes Mittelteil 260 zur Verfügung.

Figur 10 zeigt eine andere Variante, bei dir die Koppeleinrichtung 270 einen Riemen 274 oder eine Kette umfasst, über den von einer zentralen Drehachse 202aaus die Drehbewegung auf die drehbare Bremskomponente 3 übertragen wird. Bei dieser Ausgestaltung umgibt die feststehende Bremskomponente 2 die drehbare Bremskomponente 3. Bei dieser Ausgestaltung kann beispielsweise der Drehknopf 202 mit einer durchsichtigen Scheibe abgedeckt sein, an der zentrisch die Drehachse 202a angebracht ist, die durch das Bedienpanel 268 in den inneren Hohlraum des Drehknopfes 202 geführt wird, wo der Riemen 274 zur Kopplung mit der Übertragungsrichtung 1 angeordnet ist. Auch bei einer solchen Ausgestaltung ergibt sich im inneren Hohlraum 261 genügend Bauraum für das feststehende Mittelteil 260. Werden kapazitive oder optische Sensoren eingesetzt, kann die Benutzerschnittstelle 267 auch zur Eingabe von Daten verwendet werden, auch wenn die Benutzerschnittstelle 267 durch die beispielsweise transparente Wandung des Drehknopfes 202 abgedeckt wird.

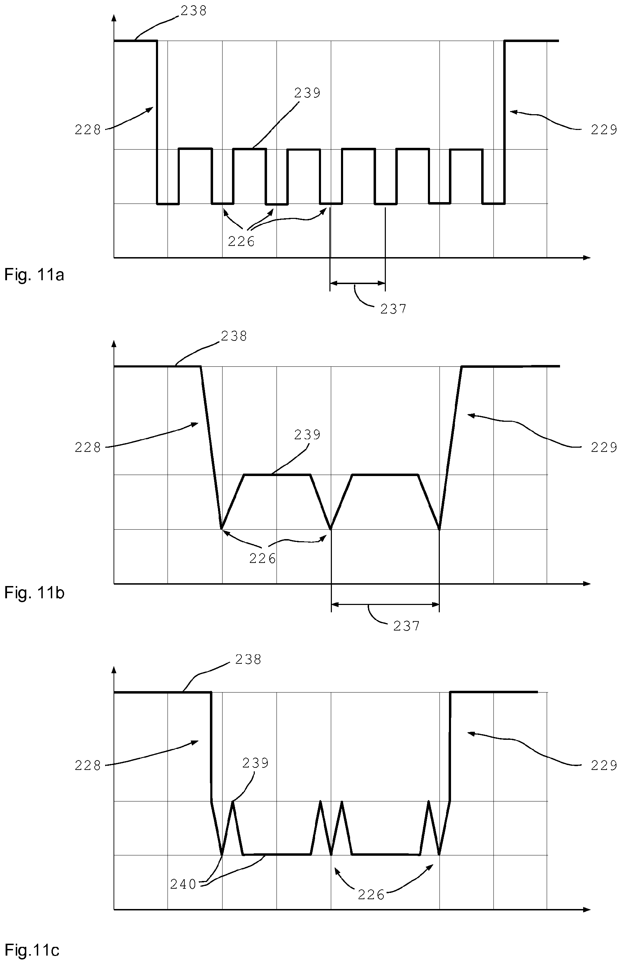

In den Figuren 11a, 11b und 11c sind mögliche Ausführungsvarianten für das dynamisch erzeugte Magnetfeld bzw. das dynamisch erzeugte Bremsmoment in Abhängigkeit von dem Drehwinkel dargestellt. Je nach Menüwahl können verschiedenste Bremsmomente erzeugt werden. Beispiele für Menüs bei Kraftfahrzeugen: Lüftungsstufe; Temperatur links oder rechts; Sitzverstellung; Lautstärke. Eine Bedienmenü kann durch Drücken oder Ziehen des Bedienelementes gewählt werden.

Figur 11a zeigt dabei eine Variante, bei der ein linker Endanschlag 228 und ein rechter Endanschlag 229 erzeugt werden. Beim Weiterdrehen des Drehknopfes 202 wird dort ein hohes Magnetfeld bzw. Anschlagmoment 238 erzeugt, wodurch der Drehknopf 202 einen hohen Widerstand gegenüber einer Drehbewegung entgegensetzt.

Direkt neben dem linken Endanschlag 228 ist ein erster Rasterpunkt 226 vorgesehen, der einem ersten Menüpunkt 225 entspricht. Soll der nächste Menüpunkt angewählt werden, so muss der Drehknopf 202 im Uhrzeigersinn gedreht werden. Dazu muss das dynamisch erzeugte höhere Magnetfeld bzw. Rastmoment 239 bzw. dessen Reibmoment überwunden werden, bevor der nächste Rasterpunkt 226 erreicht wird. In Figur 11a wird für einen gewissen Winkelbereich jeweils an den Rasterpunkten 226 und an den dazwischenliegenden Bereichen ein jeweils konstantes Magnetfeld erzeugt, welches an den Rasterpunkten erheblich geringer ist als in den dazwischenliegenden Bereichen und nochmals deutlich geringer als an den Anschlägen 228, 229.

Ein Winkelabstand 237 zwischen einzelnen Rasterpunkten ist dynamisch veränderbar und wird an die Anzahl der zur Verfügung stehenden Rasterpunkte bzw. Menüpunkte angepasst.

Figur 11b zeigt eine Variante, bei der zu den Endanschlägen 228, 229 hin das Magnetfeld nicht schlagartig ansteigt, sondern einen steilen Verlauf nimmt. Weiterhin sind an den Rasterpunkten 226 zu beiden Drehseiten hin jeweils rampenartige Steigungen des Magnetfeldes vorgesehen, wodurch der Drehwiderstand in die entsprechenden Drehrichtungen hin zunimmt. Hier werden mit der gleichen Bedieneinrichtung 200 nur drei Rasterpunkte 226 zur Verfügung gestellt, deren Winkelabstand 237 größer ist als in dem Beispiel gemäß Figur 11a.

Figur 11c zeigt eine Variante, bei der zwischen einzelnen Rasterpunkten 226 ein geringerer Drehwiderstand vorliegt und nur direkt benachbart zu den Rasterpunkten 226 jeweils ein erhöhtes Magnetfeld 239 erzeugt wird, um ein Einrasten an den einzelnen Rasterpunkten 226 zu ermöglichen und gleichzeitig nur einen geringen Drehwiderstand zwischen einzelnen Rasterpunkten zur Verfügung zu stellen.

Grundsätzlich ist auch eine Mischung der Betriebsweisen und der Magnetfeldverläufe der Figuren 11a, 11b und 11c möglich. Beispielsweise kann bei unterschiedlichen Untermenüs eine entsprechend unterschiedliche Einstellung des Magnetfeldverlaufes erfolgen. Vorzugsweise verlaufen die Stromstärken- und damit Drehmomentänderungen harmonisch (fließende Übergange, gerundet...), sodass sich ein haptisches gutes oder angenehmes Bediengefühl ergibt.

Möglich ist es in allen Fällen auch, dass bei z.B. einem Ripple (Raster) nicht wie bislang zwischen wenig und mehr Stromstärke mit gleicher Polung geschaltet wird (also z.B. +0,2 auf +0,8A = Rippel), sondern abwechslungsweise mit verändertet Polung, d.h. von +0,2 auf +0,8A und dann den nächsten Rippel mit -0,2A auf - 0,8A und dann die nächste Momentenspitze von +0,2 auf +0,8A usw.

Der vorzugsweise niederlegierte Stahl kann ein Restmagnetfeld behalten. Der Stahl wird vorzugsweise regelmäßig oder bei Bedarf entmagnetisiert (Wechselfeld).

Wenn die Dreheinheit nicht gedreht wird, d. h. der Winkel ist konstant, wird vorzugsweise über die Zeit der Strom kontinuierlich verringert. Der Strom kann auch geschwindigkeitsabhängig (Drehwinkelgeschwindigkeit der Dreheinheit) variiert werden.

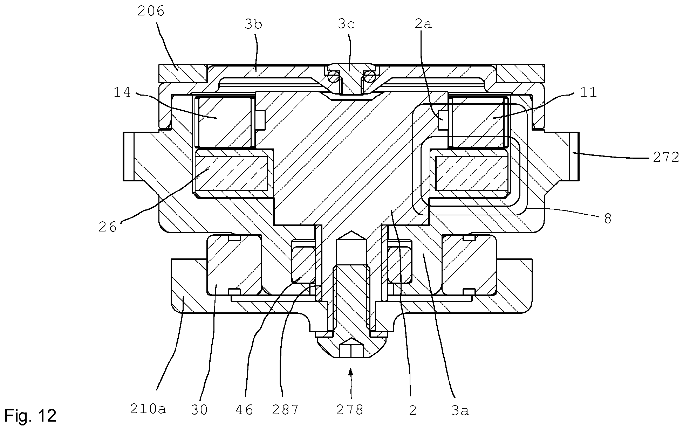

Fig. 12 zeigt eine alternative Ausführungsform, deren Aufbau im Wesentlichen mit dem Aufbau aus Figuren 5 und/oder 7 übereinstimmt.

Dargestellt ist nur die im Inneren einer haptischen Bedieneinrichtung 202 angeordnete Übertragungsvorrichtung 1. Die Übertragungsvorrichtung 1 ist auf einer separaten Aufnahme 210a montiert. Die Übertragungsvorrichtung 1 umfasst wiederum zwei Komponenten 2, 3, wobei die Komponente 2 als feststehende Bremskomponente ausgebildet ist und mit der Aufnahme 210a über die Schraube 278 verschraubt ist. Die Bremskomponente 2 weist eine hier etwa pilzförmige Gestalt auf und umfasst die Welle 212 und nimmt in oder an dem pilzförmigen Teil die elektrische Spule 26 in einem Spulenhalter auf. Die elektrische Spule 26 ist um die Symmetrieachse der feststehenden Bremskomponente 2 herumgewickelt.

Die drehbare Bremskomponente 3 umfasst ein oberes Teil bzw. einen Deckel 3b und ein unteres Teil 3a, die bei der Montage miteinander verpresst werden. Eine Dichtung kann zwischen den beiden Teilen der drehbaren Bremskomponente 3 zur Abdichtung etwaiger Spalte dienen. Hier ist die Außenverzahnung 272 an dem (unteren) Teil 3a ausgebildet. Das Teil 3b bildet den Deckel.

In der drehbaren Bremskomponente 3 sind Drehkörper 11 aufgenommen, die in entsprechenden Aufnahmen der feststehenden Bremskomponente 2 und der drehbaren Bremskomponente 3 geführt werden. Das Magnetfeld 8 ist mit zwei Feldlinien beispielhaft an einem Drehkörper 11 eingezeichnet und tritt durch den Drehkörper 11 hindurch, wobei die Drehkörper 11 hier zylinderförmig oder rollenförmig ausgebildet sind. Die Drehkörper 11 sind in einem Spalt angeordnet, der mit einem magnetorheologischen Medium und insbesondere einem magnetorheologischen Fluid gefüllt ist. Es ist hier eine umlaufende Nut 2a vorgesehen, die zur Feldkonzentration an den Drehkörpern 11 beiträgt.

Dadurch, dass die Außenverzahnung 272 an dem unteren Teil 3a ausgebildet ist, kann das Magnetfeld verbessert werden. Es können größere Wandstärken (innerhalb des vorgegebenen Bauvolumens) realisiert werden.

Die Komponente 3 ist über ein Wälzlager 30 gegenüber der Aufnahme drehbar gelagert. Ein Winkelsensor 206 (z. B. ein Drehgeber) dient zur Erfassung einer Winkelposition.

Bei dieser Ausgestaltung ist die Verzahnung 272 nicht mehr Teil des Deckels 3b wie in Fig. 7, sondern an dem Teil 3a ausgebildet. Dadurch kann dort ein stärkeres Magnetfeld erzeugt und ein höheres Bremsmoment erzielt werden. Zudem werden Walzen (Fig. 5: Kugeln; Fig. 6: Walzen) verwendet. Eine Nut oder ein Einstich 2a konzentriert das Magnetfeld. Die Schraube 3c zum Befüllen der Einheit ist mittig im Deckel 3b angeordnet und ist mit einem Dichtring versehen.

Bei allen Ausgestaltungen können die Kontaktflächen der Teile (14; 3a; 2...), welche das Bremsmoment erzeugen, eine Oberflächenstruktur (Rauheit; feines Muster) aufweisen.

Die haptische Bedieneinrichtung kann auch mindestens einen Lautsprecher (Soundquelle), eine Bluetootheinheit, WLAN, ein Funkmodul, ein Mikrofon oder Vibrationsmotor enthalten.

Der stehende Mittelteil kann folgendes beinhalten, ohne darauf beschränkt zu sein:
- Statisches Teil (z.B. Logo vom Hersteller, hintergrundbeleuchtetes Logo...). Es ist möglich und bevorzugt, dass das Mittelteil dann kein direkte Funktion hat.
- Touchpad (mit Funktionen)
- Screen (LCD, OLED, Quantum Dot, E Ink, transparentes Display...)
   ∘ Aktive
      ▪ Farbiges LCD (TFT)
      ▪ OLED
      ▪ Fluoreszenzanzeige
      ▪ Elektrolumineszenz Display
      ▪ Quantum Dots
      ▪ microLED
      ▪ Transparentes Display
   ∘ Passive
      ▪ Monochrome LCD
      ▪ Reflektive Color LCD
      ▪ eInk monochrome/color
      ▪ Fallblattanzeige
      ▪ Flip-Dot
- Touchscreen
   ∘ Resistive Systeme
   ∘ Oberflächen-kapazitive Systeme
   ∘ Projiziert-kapazitive Systeme
   ∘ Induktive Systeme
      ▪ Inklusiv Stift
      ∘ SAW (Surface Acoustic Wave) - "(schall)wellen-gesteuerte Systeme"
      ∘ Optische Systeme (in der Regel Infrarotlicht-Gitter vor dem Monitor)
      ∘ Dispersive-Signal-Technology-Systeme
- 3D Gesture Touchpad Ähnlich der kapazitiven Berührungserfassung nutzt die GestIC-Technologie die Messung des elektrischen Felds zur Erkennung von Gesten.
   ∘ 2D Gestenerkennung
- Hologram Projector
   o Projiziert ein 3D Objekt
- ARS (Augmented reality System)
   Hier verstehen wir die computergestützte Erweiterung der Realitätswahrnehmung.
- Kamera
   ∘ Sitzkontrolle
   ∘ Gesichtserkennung
- Fingerprint
   ∘ Personenidentifikation (Starten des Fahrzeuges...)
- Irisscanner
   ∘ Personenidentifikation
- Bei einem Pulsmesser
   leuchtet eine LED den aufliegenden Finger an. Durch das in regelmäßigen Schüben durch die Adern pumpende Blut, verändert sich im gleichen Abstand die Farbe des reflektierenden Lichts. Eine Fotodiode misst die Veränderungen der Farbe und gibt diese Informationen an das System weiter, welches daraus die Pulsfrequenz berechnet.
   ∘ Bei erhöhtem Puls kann der Aktor verschiedene Feedbacks geben
- Der Näherungssensor / Infrarotsensor
   nutzt einen Infrarotstrahl, um zu überprüfen, ob sich etwas dem Haptic Knob nähert.
   ∘ Stromsparmodus
- Der RGB-Sensor
   besteht aus einer Fotodiode mit einem Farbfilter und misst die Intensität, aber auch die Farbtemperatur von Lichtquellen. Was dazu führt, dass der Bildschirm mehr Kontrast, aber auch eine bessere Farbsättigung bieten kann.
- NFC (Near Field Communication, Abkürzung NFC) ist ein auf der RFID-Technik basierender internationaler Übertragungsstandard zum kontaktlosen Austausch von Daten per elektromagnetischer Induktion mittels loser gekoppelter Spulen über kurze Strecken von wenigen Zentimetern und einer Datenübertragungsrate von maximal 424 kBit/s.
   ∘ Freigabe über eine ID-Karte
   ∘ Identifikation mit einem Smartphone
- Der Gassensor
   zur Messung der Luftqualität in Innenräumen. Als langzeitstabiler Metalloxid-Gassensor mit mehreren Sensorelementen auf einem Chip stellt der SGP detaillierte Daten zur Luftqualität bereit.
   ∘ Alkomat
   ∘ Sauerstoffgehalt -> Ermüdungsgefahr
- Feuchtesensor
   ∘ misst die Feuchtigkeit
- Ein akustischer Fingerabdruck (Mikrophon)
   ist ein digitaler Code zur Charakterisierung eines Klangs oder einer Audioaufnahme unter Berücksichtigung spezieller akustischer Gegebenheiten.
   ∘ Sicherheitsfeature
- Feinstaubsensoren (PM2.5)
- Kohlendioxidsensoren (CO2)

All diese Sensoren können mit dem Fahrzeug oder wenigstens einem zu bedienenden Gegenstand vernetzt sein. Aus diesen Sensoren generierte Informationen fließen in die Optimierung der Bedienung oder zur Erhöhung vom Kundennutzen ein.

**Bezugszeichenliste:**

| | | | |
|---|---|---|---|
| 1 | Übertragungsvorrichtung | 212 | Welle |
| 2 | Komponente, feststehende Bremskomponente | 226 | Rasterpunkt |
| | | 227 | Drehrichtung |
| 2a | Nut | 228 | Endanschlag |
| 3 | Komponente, drehbare Bremskomponente | 229 | Endanschlag |
| | | 237 | Winkelabstand |
| 3a | Teil von 3 | 238 | Anschlagmoment |
| 3b | Teil von 3, Deckel | 239 | Rastermoment |
| 3c | Verschluss | 240 | Grundmoment |
| 4 | separates Teil | 241 | Kabel |
| 5 | Spalt, Kanal | 260 | feststehendes Mittelteil |
| 6 | Medium | 261 | Hohlraum in 202 |
| 7 | Magnetfelderzeugungseinrichtung | 262 | Innenkontur von 202 |
| | | 263 | Tragarm |
| 8 | Feld | 264 | Trägerteil |
| 9 | freier Abstand | 265 | Hohlraum in 263 |
| 10 | spitzwinkliger Bereich | 266 | Beleuchtungseinheit |
| 11 | Drehkörper, drehbares Übertragungselement | 267 | Benutzerschnittstelle |
| | | 268 | Bedienpanel |
| 12 | Drehachse | 268a | Anzeigeeinheit |
| 14 | Kugel | 270 | Koppeleinrichtung |
| 15 | Zylinder | 271 | (Innen-)Verzahnung |
| 16 | Keilform | 272 | (Außen-)Verzahnung |
| 17 | Richtung der Relativbewegung | 273 | Zahnrad |
| | | 274 | Riemen, Kette |
| 18 | Richtung der Relativbewegung | 275 | Sensor |
| | | 276 | Lager von 202 |
| 19 | magnetische Partikel | 277 | Wellenausgang |
| 25 | Dauermagnet | 278 | Seite |
| 26 | Spule | 279 | Seite |
| 26a | Spulenhalter | 280 | Platine |
| 27 | Steuereinrichtung | 281 | Rohrteil |
| 30 | Lager | 282 | Rohrteil |
| 46 | Dichtring | 283 | Koppelstift |
| 200 | Bedieneinrichtung | 284 | Feder |
| 202 | Drehknopf | 285 | Innendurchmesser von 202 |
| 204 | Betätigungssensor | 286 | Durchmesser von 1 |
| 206 | Winkelsensor | 287 | Schutzhülse |
| 210 | Grundplatte | | |
| 210a | Aufnahme | | |

## Patentansprüche

1. Haptische Bedieneinrichtung (200) mit einer Grundplatte (210), einem damit verbundenen feststehenden Mittelteil (260), einem um das feststehende Mittelteil (260) herum drehbaren und hohl ausgebildeten Drehknopf (202) und mit einer magnetorheologischen Übertragungsvorrichtung (1) zur gezielten Beeinflussung einer Drehbewegung des Drehknopfes (202), wobei die Übertragungsvorrichtung (1) zwei relativ zueinander drehbare Komponenten (2, 3) umfasst, von denen eine Komponente (3) als relativ zu der Grundplatte (210) drehbare Bremskomponente (3) ausgebildet ist,
**dadurch gekennzeichnet,**
**dass** das feststehende Mittelteil (260) mit einem Tragarm (263) an der Grundplatte (210) befestigt ist und dass die Übertragungsvorrichtung (1) und der Tragarm (263) benachbart zueinander angeordnet und radial innerhalb des Drehknopfes (202) aufgenommen sind
und **dass** der Tragarm (263) exzentrisch zu dem Drehknopf (202) angeordnet ist,
und **dass** der Drehknopf (202) über eine Koppeleinrichtung (270) mit der drehbaren Bremskomponente (3) drehfest gekoppelt ist.

2. Bedieneinrichtung (200) nach Anspruch 1, wobei der Drehknopf (202) über die Koppeleinrichtung (270) mit der drehbaren Bremskomponente (3) derart drehfest gekoppelt ist, dass sich bei einer Drehbewegung des Drehknopfes (202) eine räumliche Ausrichtung des Drehknopfes (202) und der drehbaren Bremskomponente (3) zueinander ändert.

3. Bedieneinrichtung (200) nach einem der vorhergehenden Ansprüche, wobei die Koppeleinrichtung (270) Koppelmittel (271, 272) an dem Drehknopf (202) und der drehbaren Bremskomponente (3) umfasst und/oder wobei die Koppeleinrichtung (270) Verzahnungen (271, 272), Zahnräder (273), Reibflächen, Riemen (274), Ketten (274), Getriebe und/oder Planetengetriebe umfasst.

4. Bedieneinrichtung (200) nach einem der vorhergehenden Ansprüche, wobei an einer Innenkontur (262) des Drehknopfes (202) eine Innenverzahnung (271) und an einer Außenkontur (263) der drehbaren Bremskomponente (3) eine mit der Innenverzahnung (271) gekoppelte Außenverzahnung (272) ausgebildet ist.

5. Bedieneinrichtung (200) nach einem der vorhergehenden Ansprüche, wobei axial durch den Drehknopf (202) elektrische Kabel (241) durchgeführt sind und wobei der Tragarm (263) insbesondere zur Führung der elektrischen Kabel (241) dient.

6. Bedieneinrichtung (200) nach einem der vorhergehenden Ansprüche, wobei der Tragarm (263) an einem Ende mit der Grundplatte (210) verbunden ist und wobei am anderen Ende des Tragarms (263) ein Trägerteil (264) angeordnet ist und/oder wobei an dem Trägerteil (264) wenigstens eine Benutzerschnittstelle (267) aufgenommen ist und wobei die Benutzerschnittstelle (267) insbesondere ein Bedienpanel (268), ein Display, ein berührungsempfindliches Display mit oder ohne haptischem Feedback und/oder wenigstens eine visuelle Kamera oder einen Sensor (275) umfasst und/oder wobei an dem Trägerteil (264) eine Beleuchtungseinheit (266) aufgenommen ist.

7. Bedieneinrichtung (200) nach einem der vorhergehenden Ansprüche, wobei der Drehknopf (202) und die drehbare Bremskomponente (3) separat drehbar gelagert sind und/oder wobei die feststehende Bremskomponente (2) radial innen angeordnet ist und von der drehbaren Bremskomponente (3) umgeben ist und wobei die feststehende Bremskomponente (2) insbesondere eine mit der Grundplatte (210) verbundene Welle (212) umfasst.

8. Bedieneinrichtung (200) nach einem der vorhergehenden Ansprüche, wobei die Übertragungsvorrichtung (1) genau einen Wellenausgang (277) aufweist, welcher über genau eine berührende Dichtung (46) abgedichtet ist und insbesondere wobei die Übertragungsvorrichtung (1) auf einer Seite (278) den Wellenausgang (277) und auf der gegenüberliegenden Seite (279) eine geschlossene Wandung aufweist.

9. Bedieneinrichtung (200) nach einem der vorhergehenden Ansprüche, wobei der Drehknopf (202) zwei axial gegeneinander verschiebbare Rohrteile (281, 282) umfasst, welche insbesondere über Koppelstifte (283) drehfest miteinander gekoppelt sind und/oder wobei der Drehknopf (202) hülsenförmig ausgebildet ist.

10. Bedieneinrichtung (200) nach einem der vorhergehenden Ansprüche, wobei der Drehknopf (202) über wenigstens ein Lager (276) an der Grundplatte (210) gelagert ist und/oder wobei der Drehknopf (202) axial verschiebbar ist und insbesondere im Bereich der Endposition eine haptische Rückmeldung gibt.

11. Bedieneinrichtung (200) nach einem der vorhergehenden Ansprüche, wobei dem Drehknopf (202) wenigstens ein Sensor (204) zur Erfassung einer axialen Betätigung und/oder zur Erfassung einer Winkelveränderung oder einer absoluten Winkelposition zugeordnet ist.

12. Bedieneinrichtung (200) nach einem der vorhergehenden Ansprüche, wobei eine Differenz zwischen einem lichten Innendurchmesser (285) des Drehknopfes (202) und einem Außendurchmesser (286) der Übertragungsvorrichtung (1) größer 3 mm und kleiner 50 mm beträgt und/oder wobei ein Außendurchmesser des Drehknopfes (202) zwischen 20 mm und 90 mm beträgt und/oder wobei eine Höhe des Drehknopfes zwischen 10 mm und 60 mm beträgt.

13. Bedieneinrichtung (200) nach einem der vorhergehenden Ansprüche, wobei die Übertragungsvorrichtung (1) einen Magnetkreis und eine Magnetfelderzeugungseinrichtung (7) mit einer elektrischen Spule (26) und einen Spalt (5) zwischen der feststehenden Bremskomponente und der drehbaren Bremskomponente umfasst, der mit einem magnetorheologischen Medium (6) versehen ist und/oder wobei zwischen der feststehenden Bremskomponente (2) und der drehbaren Bremskomponente (3) Drehkörper (11) angeordnet sind, welche von dem magnetorheologischen Medium (6) umgeben sind.

14. Bedieneinrichtung (200) nach einem der vorhergehenden Ansprüche, wobei eine Steuereinrichtung (27) umfasst ist, welche dazu ausgebildet, mit der elektrischen Spule (26) eine variable Bremswirkung an dem Drehknopf (202) hervorzurufen.

## Claims

1. Haptic operating device (200) having a base plate (210), a stationary central part (260) connected thereto, a rotary knob (202) which can be rotated about the stationary central part (260) and which has a hollow design, and having a magnetorheological transmission device (1) for manipulating the rotational movement of the rotary knob (202) in a targeted manner, wherein the transmission device (1) comprises two components (2, 3) which can be rotated relative to each other, one component (3) of which is designed as a brake component (3) that can be rotated relative to the base (210),
**characterized in that**
the stationary central part (260) is attached to the base plate (210) with a support arm (263) and that the transmission device (1) and the support arm (263) are arranged adjacent to each other and are mounted radially within the rotary knob (202)
and that the support arm (263) is positioned eccentrically with respect to the rotary knob (202),
and that the rotary knob (202) is coupled with the rotatable brake component (3) in a rotationally fixed manner by means of a coupling device (270).

2. Operating device (200) according to Claim 1, wherein the rotary knob (202) is coupled with the rotatable brake component (3) by means of the coupling device (270) in such a way that a spatial alignment of the rotary knob (202) and the rotatable brake component (3) in relation to each other changes when the rotary knob (202) is turned.

3. Operating device (200) according to any one of the preceding claims, wherein the coupling device (270) comprises coupling means (271, 272) on the rotary knob (202) and on the rotatable brake component (3) and/or wherein the coupling device (270) comprises toothing systems (271, 272), gear wheels (273), friction surfaces, belts (274), chains (274), a gearbox and/or planetary gearbox.

4. Operating device (200) according to any one of the preceding claims, wherein on an inner contour (262) of the rotary knob (202) an inner toothing system (271) is formed and on an outer contour (263) of the rotatable brake component (3) an outer toothing system (272), coupled with the inner toothing system (271), is formed.

5. Operating device (200) according to any one of the preceding claims, wherein electrical cables (241) are passed axially through the rotary knob (202) and wherein the support arm (263) is used in particular for guiding the electrical cables (241).

6. Operating device (200) according to any one of the preceding claims, wherein the support arm (263) is connected at one end to the base plate (210) and wherein a support part (264) is arranged at the other end of the support arm (263) and/or wherein at least one user interface (267) is mounted on the support part (264) and wherein the user interface (267) comprises in particular a control panel (268), a display, a touch-sensitive display with or without haptic feedback, and/or at least one visual camera or a sensor (275) and/or wherein a lighting unit (266) is mounted on the support part (264).

7. Operating device (200) according to any one of the preceding claims, wherein the rotary knob (202) and the rotatable brake component (3) are mounted in a separately rotatable manner and/or wherein the stationary brake component (2) is arranged radially inside and is surrounded by the rotatable brake component (3) and wherein the stationary brake component (2) comprises in particular a shaft (212) connected to the base plate (210).

8. Operating device (200) according to any one of the preceding claims, wherein the transmission device (1) comprises exactly one shaft output (277), which is sealed by exactly one contacting seal (46) and in particular wherein the transmission device (1) comprises the shaft output (277) on one side (278) and a closed wall on the opposite side (279).

9. Operating device (200) according to any one of the preceding claims, wherein the rotary knob (202) comprises two pipe parts (281, 282) that can be moved axially towards each other and are coupled to each other in a rotationally fixed manner, in particular by means of coupling pins (283), and/or wherein the rotary knob (202) has a tubular design.

10. Operating device (200) according to any one of the preceding claims, wherein the rotary knob (202) is mounted on the base plate (210) via at least one bearing (276) and/or wherein the rotary knob (202) is axially displaceable and provides haptic feedback, in particular in the region of the end position.

11. Operating device (200) according to any one of the preceding claims, wherein at least one sensor (204) is assigned to the rotary knob (202) for detecting an axial actuation and/or for detecting an angular change or an absolute angular position.

12. Operating device (200) according to any one of the preceding claims, wherein a difference between a clear inner diameter (285) of the rotary knob (202) and an outer diameter (286) of the transmission device (1) is greater than 3 mm and less than 50 mm and/or wherein an outer diameter of the rotary knob (202) is between 20 mm and 90 mm and/or wherein a height of the rotary knob is between 10 mm and 60 mm.

13. Operating device (200) according to any one of the preceding claims, wherein the transmission device (1) comprises a magnetic circuit and a magnetic field-generating device (7) with an electrical coil (26) and a gap (5) between the stationary brake component and the rotatable brake component, which is provided with a magnetorheological medium (6) and/or wherein rotary bodies (11) which are surrounded by the magnetorheological medium (6) are arranged between the stationary brake component (2) and the rotatable brake component (3).

14. Operating device (200) according to any one of the preceding claims, comprising a control device (27), which is designed to induce a variable braking action on the rotary knob (202) using the electrical coil (26) .

## Revendications

1. Dispositif de commande haptique (200) avec une plaque de base (210), une partie centrale fixe (260) reliée à celle-ci, un bouton rotatif (202) réalisé de manière creuse et pouvant tourner autour de la partie centrale fixe (260) et avec un dispositif de transmission magnétorhéologique (1) pour influencer de manière ciblée un mouvement de rotation du bouton rotatif (202), dans lequel le dispositif de transmission (1) comprend deux composants (2, 3) rotatifs l'un par rapport à l'autre dont un composant (3) est réalisé en tant composant de freinage (3) rotatif par rapport à la plaque de base (210),
**caractérisé en ce**
**que** la partie centrale fixe (260) est fixée avec un bras de support (263) à la plaque de base (210) et le dispositif de transmission (1) et le bras de support (263) sont disposés au manière adjacente l'un de l'autre et sont réceptionnés radialement à l'intérieur du bouton rotatif (202),
et **que** le bras de support (263) est disposé de manière excentrée par rapport au bouton rotatif (202),
et **que** le bouton rotatif (202) est accouplé solidaire en rotation, via un dispositif d'accouplement (270), au composant de freinage rotatif (3).

2. Dispositif de commande (200) selon la revendication 1, dans lequel le bouton rotatif (202) est accouplé solidaire en rotation, via le dispositif d'accouplement (270), au composant de freinage rotatif (3) de manière à ce que, lors d'un mouvement de rotation du bouton rotatif (202), une orientation spatiale mutuelle du bouton rotatif (202) et du composant de freinage rotatif (3) varie.

3. Dispositif de commande (200) selon l'une des revendications précédentes, dans lequel le dispositif d'accouplement (270) comprend des moyens d'accouplement (271, 272) au niveau du bouton rotatif (202) et du composant de freinage rotatif (3) et/ou dans lequel le dispositif d'accouplement (270) comprend des dentures (271, 272), des routes dentées (273), des surfaces de friction, des courroies (274), des chaînes (274), des engrenages et/ou engrenages planétaires.

4. Dispositif de commande (200) selon l'une des revendications précédentes, dans lequel, au niveau d'un contour intérieur (262) du bouton rotatif (202), une denture intérieure (271) est réalisée et au niveau d'un contour extérieur (263) du composant de freinage rotatif (3), une denture extérieure (272) accouplée à la denture intérieure (271) est réalisée.

5. Dispositif de commande (200) selon l'une des revendications précédentes, dans lequel on fait passer des câbles électriques (241) axialement à travers le bouton rotatif (202) et dans lequel le bras de support (263) sert en particulier à guider les câbles électriques (241).

6. Dispositif de commande (200) selon l'une des revendications précédentes, dans lequel le bras de support (263) est relié à une extrémité à la plaque de base (210) et dans lequel, à l'autre extrémité du bras de support (263), une partie de support (264) est disposée et/ou dans lequel au moins une interface utilisateur (267) est réceptionnée au niveau de la partie de support (264) et dans lequel l'interface utilisateur (267) comprend en particulier un panneau de commande (268), un écran, un écran tactile avec ou sans feedback haptique et/ou au moins une caméra visuelle ou un capteur (275) et/ou dans lequel une unité d'éclairage (266) est réceptionnée au niveau de la partie de support (264).

7. Dispositif de commande (200) selon l'une des revendications précédentes, dans lequel le bouton rotatif (202) et le composant de freinage rotatif (3) sont supportés séparément de manière rotative et/ou dans lequel le composant de freinage fixe (2) est disposé radialement à l'intérieur et est entouré par le composant de freinage rotatif (3) et dans lequel le composant de freinage fixe (2) comprend en particulier un arbre (212) relié à la plaque de base (210).

8. Dispositif de commande (200) selon l'une des revendications précédentes, dans lequel le dispositif de transmission (1) présente exactement une sortie d'arbre (277) laquelle est étanchéifiée par l'intermédiaire d'exactement une garniture d'étanchéité à contact (46) et dans lequel en particulier le dispositif de transmission (1) présente la sortie d'arbre (277) sur un côté (278) et une paroi fermée sur le côté situé en vis-à-vis (279).

9. Dispositif de commande (200) selon l'une des revendications précédentes, dans lequel le bouton rotatif (202) comprend deux éléments tubulaires (281, 282) déplaçables axialement l'un par rapport à l'autre, lesquels sont accouplés solidaires en rotation en particulier par l'intermédiaire de tiges d'accouplement (283) et/ou dans lequel le bouton rotatif (202) est réalisé en forme de manchon.

10. Dispositif de commande (200) selon l'une des revendications précédentes, dans lequel le bouton rotatif (202) est supporté, via au moins un palier (276), au niveau de la plaque de base (210) et/ou dans lequel le bouton rotatif (202) est déplaçable axialement et délivre, en particulier dans la zone de la position finale, un retour haptique.

11. Dispositif de commande (200) selon l'une des revendications précédentes, dans lequel on associe au bouton rotatif (202) au moins un capteur (204) pour la détection d'un actionnement axial et/ou pour la détection d'une modification d'angle ou d'une position angulaire absolue.

12. Dispositif de commande (200) selon l'une des revendications précédentes, dans lequel une différence entre un diamètre intérieur d'ouverture (285) du bouton rotatif (202) et un diamètre extérieur (286) du dispositif de transmission (1) est supérieure à 3 mm et inférieure à 50 mm et/ou dans lequel un diamètre extérieur du bouton rotatif (202) est compris entre 20 mm et 90 mm et/ou dans lequel une hauteur du bouton rotatif est comprise entre 10 mm et 60 mm.

13. Dispositif de commande (200) selon l'une des revendications précédentes, dans lequel le dispositif de transmission (1) comprend un circuit magnétique et un dispositif de génération de champ magnétique (7) avec une bobine électrique (26) et un entrefer (5) entre le composant de freinage fixe et le composant de freinage rotatif, lequel est doté d'un milieu magnétorhéologique (6) et/ou dans lequel des corps rotatifs (11) sont disposés entre le composant de freinage fixe (2) et le composant de freinage rotatif (3), lesquels sont entourés par le milieu magnétorhéologique (6).

14. Dispositif de commande (200) selon l'une des revendications précédentes, dans lequel un dispositif de réglage (27) est compris, lequel est réalisé pour provoquer, avec la bobine électrique (26), un effet de freinage variable au niveau du bouton rotatif (202).
